# EUROPÄISCHE PATENTSCHRIFT

(11) **EP 0 678 950 B1**
(45) Veröffentlichungstag und Bekanntmachung des Hinweises auf die Patenterteilung: **08.10.1997**
(21) Anmeldenummer: 94110055.4
(22) Anmeldetag: 29.06.1994
(51) Int. Cl.: H02B 1/54

(54) **Erdbebenschutzvorrichtung für eine gasisolierte Schaltanlage**
Device for protecting gas-insulated switchgear against earthquakes
Dispositif de protection contre les tremblements de terre pour appareil de commutation à isolement gazeux

(30) Priorität: 19.04.1994 CH 1215/94
(43) Veröffentlichungstag der Anmeldung: 25.10.1995
(73) Patentinhaber: ASEA BROWN BOVERI AG, 5400 Baden (CH)
(72) Erfinder: Hägeli, Heinz, CH-8116 Würenlos (CH); Spicak, Karel, CH-8052 Zürich (CH)

(56) Entgegenhaltungen:
- EP-A- 0 091 354
- DE-A- 1 540 491
- DE-A- 1 665 662
- FR-A- 2 029 292
- FR-A- 2 392 487
- US-A- 4 759 428
- IEEE TRANSACTION ON POWER APPARATUS AND SYSTEMS, Bd. PAS-103, Bd. Nr. 12, 1984, New York US, Seiten 3546-3550; K.G. PETTERSSON et al.: 'Influence of earthquakes and other loads on the layout of gas-insulated substations'
- PATENT ABSTRACTS OF JAPAN vol. 16, no. 545 (M-1337) 16. November 1992 & JP-A-04 203 633

## Beschreibung

### TECHNISCHES GEBIET

Die Erfindung geht aus von einer Erdbebenschutzvorrichtung für eine gasisolierte Schaltanlage gemäss dem Oberbegriff des Anspruchs 1. Eine Erdbebenschutzvorrichtung dieser Art ist im Dokument "IEEE Transaction on Power Apparatus and Systems, Bd. Pas 103, Nr 12, 1984, New York, Seiten 3546-3550, KJell Petterson et al. Influence of hearthquakes and other loads on the layout of gas-insulated substations" bekannt.

Aus der Patentschrift EP 0 129 216 B1 ist ein Tragrahmen für eine Baugruppe einer metallgekapselten gasisolierten Schaltanlage bekannt. Dieser Tragrahmen liegt direkt und ohne einen Zwischenraum auf einem Fundament auf und ist starr mit diesem verbunden. Der Tragrahmen nimmt das gesamte Gewicht dieser Baugruppe auf und überträgt es unmittelbar auf das Fundament. Sind mehrere derartige Baugruppen nebeneinander angeordnet, so sind sie durch metallgekapselte Sammelschienen miteinander verbunden. Ab einer gewissen Baulänge der Sammelschienen werden sie in der Regel, zum Ausgleich der infolge von betriebsbedingter Erwärmung und Abkühlung auftretenden mechanischen Spannungen, mit Längskompensatoren versehen. Diese Kompensatoren müssen druckdicht ausgeführt werden, sodass durch sie kein Isoliergas aus der gasisolierten Schaltanlage entweichen kann. Derartige Kompensatoren sind vergleichsweise teuere Bauelemente. Beim Auslegen der gasisolierten Schaltanlage im Hinblick auf Erdbebensicherheit müssen die Kompensatoren besonders berücksichtigt werden.

Die einzelnen Baugruppen von gasisolierten metallgekapselten Schaltanlagen, in der Regel sind dies die einzelnen Schaltfelder, sind üblicherweise sehr kompakt gebaut und sind deshalb durch Erdbebenstösse weniger gefährdet als beispielsweise konventionelle Freiluftschaltanlagen. Wenn diese gasisolierten Schaltanlagen jedoch eine grössere Anzahl von Baugruppen aufweisen, beispielsweise mehrere Einspeisungen und eine Vielzahl von Abgangsfeldern, so muss die Schaltanlage insgesamt, wenn sie in einem erdbebengefährdeten Gebiet errichtet werden soll, erdbebensicher ausgeführt werden. Insbesondere müssen die im Verlauf der Sammelschienen eingebauten Längskompensatoren aufwendig gegen mögliche, durch Erdbeben verursachte Schäden geschützt werden.

Aus der Patentschrift US 3,794,277 ist ferner ein erdbebenbeständig ausgeführter Tragrahmen für ein Schaltgerät bekannt, der durch Stossdämpfer in Position gehalten wird. Diese Stossdämpfer werden jedoch erst dann aktiviert, wenn die Belastung des Tragrahmens durch Erdbebenstösse einen vorgegebenen Wert übersteigt. Derartige herkömmlichen Schutzeinrichtungen gegen die Auswirkungen von Erdbebenstössen werden häufig zwischen dem zu schützenden Gerät und dem dieses tragende Fundament eingebaut. Sie sind in der Lage, das Schaltgerät gegen Erdbebenstösse aus beliebigen Richtungen zu schützen und sie dienen als Bewegungsdämpfer für die durch die Erdbebenstösse angeregten oszillierenden Massen, in welchen die kinetische Energie dieser Massen beispielsweise mit Hilfe von Reibungselementen in Wärme umgesetzt wird. Häufig müssen derartige Schutzeinrichtungen jedoch nach einem Erdbeben revidiert werden, um wieder voll einsatzfähig zu sein.

### DARSTELLUNG DER ERFINDUNG

Die Erfindung, wie sie in dem unabhängigen Anspruch gekennzeichnet ist, löst die Aufgabe, eine Erdbebenschutzvorrichtung für eine gasisolierte Schaltanlage zu schaffen, die neben der Schutzfunktion auch eine Kompensation der infolge von betriebsbedingter Erwärmung und Abkühlung in der gasisolierten Schaltanlage auftretenden mechanischen Belastungen ermöglicht.

Die durch die Erfindung erreichten Vorteile sind darin zu sehen, dass die nötige Anzahl der für die Kompensation der infolge von betriebsbedingten Erwärmungen und Abkühlungen auftretenden mechanischen Spannungen im Verlauf der Sammelschienen benötigten Längskompensatoren auf ein Minimum beschränkt wird. Diese Längskompensatoren sind vergleichsweise teuer und müssen bei der Montage sehr sorgfältig eingestellt werden, sodass eine Reduzierung ihrer Anzahl sowohl wirtschaftliche Vorteile mit sich bringt als auch eine vorteilhafte Verkürzung der für die gasisolierte Schaltanlage benötigten Montagezeit. Zudem verursacht der Einbau von Längskompensatoren in die Sammelschienen eine Vergrösserung der Baulänge der gasisolierten Schaltanlage, sodass ein Einsparen von Längskompensatoren zu einer gasisolierten Schaltanlage mit einer geringeren Längserstreckung führt. Die hydraulischen Stossbremsen benötigen erheblich weniger Wartungsaufwand als die Längskompensatoren, was den Unterhalt der gasisolierten Schaltanlage vorteilhaft verbilligt.

Diese Erdbebenschutzvorrichtung ist für eine gasisolierte Schaltanlage vorgesehen. Die gasisolierte Schaltanlage weist mindestens eine Sammelschiene auf und erstreckt sich in Richtung der Sammelschienenachse. Sie weist zudem mindestens zwei auf jeweils einem Tragrahmen befestigte Schaltfelder und Mittel auf, welche die Tragrahmen so mit einem Fundament verbinden, dass mindestens einer der mindestens zwei Tragrahmen mindestens in Richtung der Sammelschienenachse verschiebbar ist. Der mindestens eine verschiebbare Tragrahmen ist für jede mögliche Verschiebungsrichtung mit mindestens einem Stossdämpfer versehen, welcher eine Wirkachse in der Ebene des Tragrahmens aufweist. Diese Wirkachse verläuft zudem durch den in die Ebene des Tragrahmens projizierten Schwerpunkt des Schaltfeldes oder möglichst nahe an diesem vorbei.

Die gasisolierte Schaltanlage erstreckt sich in Richtung der Sammelschienenachse, deshalb ist es vorteilhaft, dass diese Wirkachse parallel zur Richtung der Sammelschienenachse verläuft.

Ferner ist es vorteilhaft, dass der mindestens eine verschiebbare Tragrahmen mit mindestens zwei jeweils eine Wirkachse in der Ebene des Tragrahmens aufweisenden Stossdämpfern versehen ist, wobei diese Wirkachsen parallel zur Richtung der Sammelschienenachse verlaufen, und wobei diese Wirkachsen beidseitig des in die Ebene des Tragrahmens projizierten Schwerpunkts des Schaltfeldes verlaufen und möglichst den gleichen Abstand von diesem aufweisen.

Der mindestens eine Stossdämpfer setzt betriebsbedingten vergleichsweise kleinen und vergleichsweise langsamen Verschiebungen des Tragrahmens keinen nennenswerten Widerstand entgegen, er blockiert jedoch die Auswirkungen von schockartigen dynamischen Belastungen, wie beispielsweise die von Erdbebenstössen, auf den Tragrahmen und baut Kraftspitzen ab. Nach dem Abklingen der Belastung wird diese Blockierung selbsttätig gelöst.

Als besonders zweckmässig erweist es sich, dass der mindestens eine Stossdämpfer als hydraulische Stossbremse ausgebildet ist, die einerseits mit dem Tragrahmen und andererseits mit dem Fundament verbunden ist.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine Seitenansicht eines Abgangsfeldes einer gasisolierten Schaltanlage,
Fig.2 eine Draufsicht auf ein Abgangsfeld einer gasisolierten Schaltanlage,
Fig.3 eine erste schematische Darstellung der Anordnung der Tragrahmen einer gasisolierten Schaltanlage,
Fig.4 eine zweite schematische Darstellung der Anordnung der Tragrahmen einer gasisolierten Schaltanlage,
Fig.5 eine dritte schematische Darstellung der Anordnung der Tragrahmen einer gasisolierten Schaltanlage,
Fig.6 eine vierte schematische Darstellung der Anordnung der Tragrahmen einer gasisolierten Schaltanlage, und
Fig.7 eine fünfte schematische Darstellung der Anordnung der Tragrahmen einer gasisolierten Schaltanlage.

Bei allen Figuren sind gleich wirkende Elemente mit gleichen Bezugszeichen versehen. Alle für das unmittelbare Verständnis der Erfindung nicht erforderlichen Elemente sind nicht dargestellt.

### WEGE ZUR AUSFÜHRUNG DER ERFINDUNG

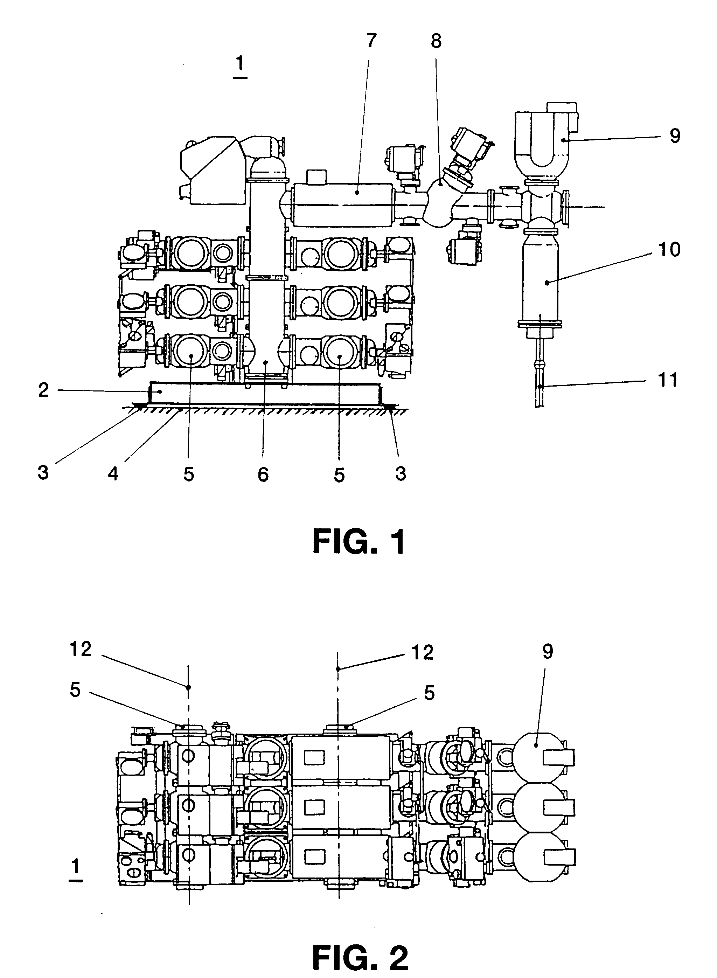

Die Fig.1 zeigt eine schematisch dargestellte Seitenansicht eines Abgangsfeldes 1 einer metallgekapselten gasisolierten Schaltanlage und die Fig.2 zeigt eine Draufsicht auf dieses Abgangsfeld 1. Dieses Abgangsfeld 1 weist einen Tragrahmen 2 auf, der aus einem Metallprofil gefertigt ist. Als besonders geeignete Metallprofile können beispielsweise I-Profile oder Rohrprofile aus Stahl eingesetzt werden. Die Rohrprofile weisen in der Regel einen runden oder einen rechteckigen Querschnitt auf. An den Ecken des Tragrahmens 2 sind Winkelprofile 3 angebracht, welche der Verbindung des Tragrahmens 2 mit einem Fundament 4 dienen. Diese Verbindung kann kraftschlüssig ausgebildet sein, sie kann jedoch auch ein Gleiten des Tragrahmens 2 auf einer in das Fundament 4 eingelassenen und hier nicht dargestellten Tragschiene zulassen. Bei diesem Typ einer metallgekapselten und gasisolierten Schaltanlage sind die Sammelschienen 5 senkrecht übereinander an einer oder an beiden Seiten der senkrecht gestellten Leistungsschalter 6 angeordnet. Der Abgang ist mit einem Stromwandler 7 versehen, dem ein Trenner 8 nachgeschaltet ist. Nach dem Trenner 8 ist ein Spannungswandler 9 vorgesehen. Ein Kabelendverschluss 10 verbindet das abgehende Hochspannungskabel 11 mit der gasisolierten Schaltanlage. Die Sammelschienen 5 weisen jeweils eine Sammelschienenachse 12 auf. Die Sammelschienenachsen 12 eines jeden der beiden Sammelschienensysteme liegen in einer Ebene senkrecht übereinander.

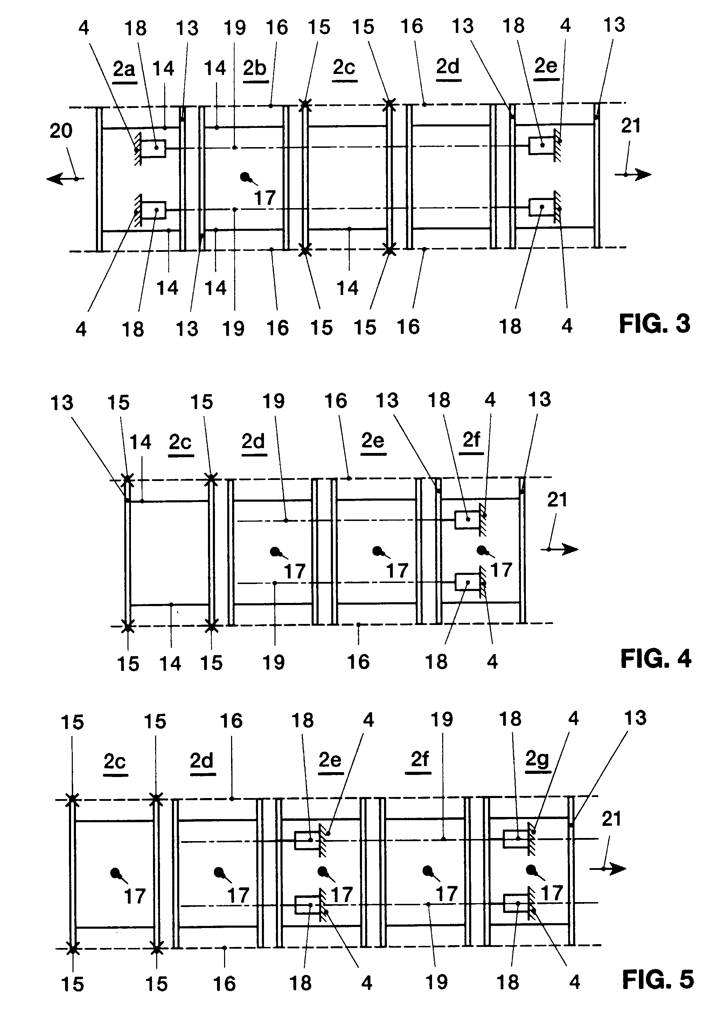

Die Fig.3 zeigt eine erste schematische Darstellung der Anordnung der Tragrahmen 2a bis 2e einer gasisolierten Schaltanlage die beispielsweise fünf Schaltfelder aufweist. Jeder der Tragrahmen 2a bis 2e weist zwei Traversen 13 auf, die durch zwei Querträger 14 verbunden sind. Bei diesem Ausführungsbeispiel ist der mittlere Tragrahmen 2c starr mit dem Fundament 4 verbunden, wie die Kreuze 15 an den Ecken dieses Rahmens andeuten. Die anderen Tragrahmen 2a, 2b, 2d und 2e sind an ihren Ecken jeweils mit einer Tragschiene 16 verbunden, die durch gestrichelt ausgeführte Linien angedeutet ist. Diese Tragschienen 16 sind parallel zueinander fest in das Fundament 4 eingelassen. Die Tragrahmen 2a, 2b, 2d und 2e sind so mit den Tragschienen 16 verbunden, dass sie in Richtung der Tragschienen 16 auf diesen gleiten können, wenn entsprechende Kräfte auf diese Tragrahmen 2 einwirken. Eine Bewegung in andere Richtungen ist hier ausgeschlossen. Die Richtung der Sammelschienenachsen 12 verläuft parallel zu der Richtung der Tragschienen 16. Im Tragrahmen 2b ist der in die Ebene dieses Tragrahmens projizierte Schwerpunkt 17 des durch den Tragrahmen 2b getragenen Schaltfeldes angegeben. Bei gleich oder ähnlich aufgebauten Schaltfeldern liegt deren projizierter Schwerpunkt in einem ähnlichen Bereich des jeweiligen Tragrahmens, deshalb sind die übrigen Schwerpunkte 17 hier nicht eingezeichnet. In dem äusseren Tragrahmen 2a sind zwei hydraulische Stossbremsen 18 so zwischen dem Fundament 4 und einer der Traversen 13 eingebaut, dass ihre Wirkachsen 19 parallel zur Sammelschienenachse und beidseits im gleichen Abstand zu den Schwerpunkten 17 verlaufen. In dem äusseren Tragrahmen 2e sind zwei hydraulische Stossbremsen 18 so zwischen dem Fundament 4 und einer der Traversen 13 eingebaut, dass ihre Wirkachsen 19 parallel zur Sammelschienenachse und beidseits im gleichen Abstand zu den Schwerpunkten 17 verlaufen. Ein Pfeil 20 gibt die Richtung an, in welche sich die Tragrahmen 2a und 2b vom fixierten Tragrahmen 2c weg bewegen, wenn sich Dehnungen infolge einer Erwärmung der Schaltfelder ergeben. Ein Pfeil 21 gibt die Richtung an, in welche sich die Tragrahmen 2d und 2e vom fixierten Tragrahmen 2c weg bewegen, wenn sich Dehnungen infolge einer Erwärmung der Schaltfelder ergeben. Eine derartige gasisolierte Schaltanlage mit vergleichsweise kleinen Abmessungen kann so ohne Längskompensatoren in den Sammelschienen aufgebaut werden, wenn diese keinen all zu grossen Temperaturschwankungen ausgesetzt wird.

Die Fig.4 zeigt eine zweite schematische Darstellung der Anordnung der Tragrahmen 2c bis 2f einer gasisolierten Schaltanlage die beispielsweise vier Schaltfelder aufweist. Bei diesem Ausführungsbeispiel, welches für eine kleine gasisolierte Schaltanlage geeignet ist, ist der Tragrahmen 2c fest mit dem Fundament 4 verbunden, wie die Kreuze 15 an den Ecken dieses Rahmens andeuten. Die anderen Tragrahmen 2d, 2e und 2f sind an ihren Ecken jeweils mit einer Tragschiene 16 verbunden, die durch gestrichelt ausgeführte Linien angedeutet ist. Diese Tragschienen 16 sind parallel zueinander fest in das Fundament 4 eingelassen. Die Tragrahmen 2d, 2e und 2f sind so mit den Tragschienen 16 verbunden, dass sie in Richtung der Tragschienen 16 auf diesen gleiten können, wenn entsprechende Kräfte auf diese Tragrahmen einwirken. Eine Bewegung in andere Richtungen ist hier ausgeschlossen. Die Richtung der Sammelschienenachsen 12 verläuft parallel zu der Richtung der Tragschienen 16. In den Tragrahmen 2d, 2e und 2f ist jeweils der in die Ebene dieses Tragrahmens projizierte Schwerpunkt 17 des durch den jeweiligen Tragrahmen getragenen Schaltfeldes angegeben. Lediglich in dem äussersten Tragrahmen 2f sind zwei entsprechend dimensionierte hydraulische Stossbremsen 18 so zwischen dem Fundament 4 und einer der Traversen 13 eingebaut, dass ihre Wirkachsen 19 parallel zur Sammelschienenachse und beidseits im gleichen Abstand zu den Schwerpunkten 17 verlaufen. Ein Pfeil 21 gibt die Richtung an, in welche sich die Tragrahmen 2d, 2e und 2f vom fixierten Tragrahmen 2c weg bewegen, wenn sich Dehnungen infolge von einer Erwärmung der Schaltfelder ergeben.

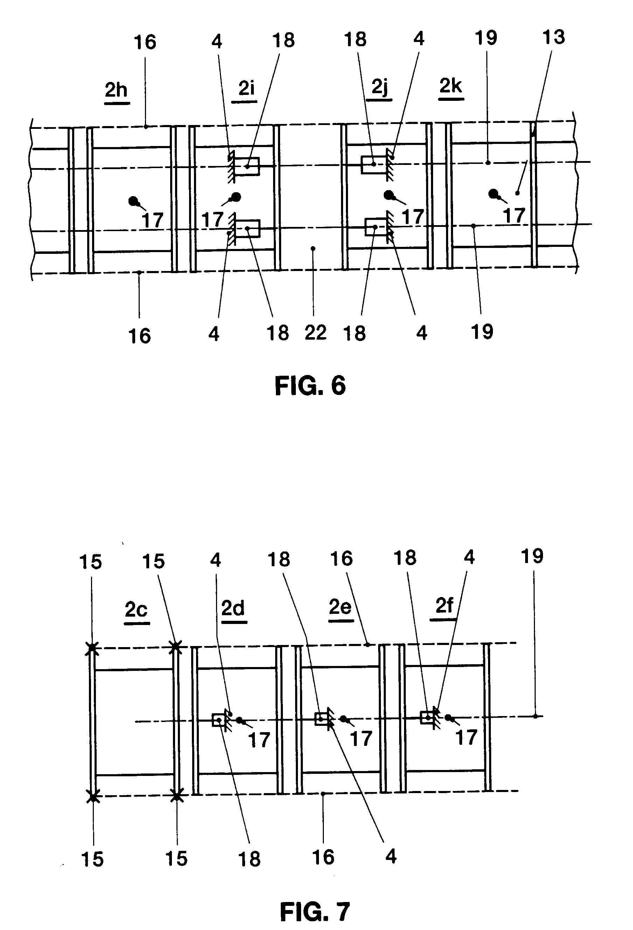

Die Fig.5 zeigt eine Anordnung von fünf Tragrahmen 2c bis 2g die entsprechend der Anordnung gemäss Fig.4 aufgebaut ist. In diesem Beispiel ist lediglich jeder zweite der gleitfähig befestigten Tragrahmen, nämlich die Tragrahmen 2e und 2g, mit zwei hydraulischen Stossbremsen 18 versehen. Die hydraulischen Stossbremsen 18 lassen sich, wenn weniger kräftig ausgelegte Typen gewählt werden, auch paarweise in jeden der gleitfähig befestigten Tragrahmen einbauen. Es steht eine Vielzahl von Stossbremsentypen zur Verfügung, sodass für jede gasisolierte Schaltanlage eine wirtschaftlich und wirkungsmässig optimale Ausrüstung mit hydraulischen Stossbremsen 18 gewählt werden kann. Bei dem Einbau der hydraulischen Stossbremsen 18 können auch die oftmals sehr beengten Raumverhältnisse entsprechend berücksichtigt werden. Insbesondere soll hier noch darauf hingewiesen werden, dass es durchaus möglich ist, wie dies in Fig.7 gezeigt wird, statt des paarweisen Einbaus der hydraulischen Stossbremsen 18 diese auch einzeln einzubauen, allerdings müssen diese hydraulischen Stossbremsen 18 dann so eingebaut werden, dass ihre Wirkachse 19 durch die in die Ebene der Tragrahmen 2c bis 2f projizierten Schwerpunkte 17 geht oder dass sie zumindest möglichst in der Nähe dieser Schwerpunkte 17 verläuft.

Bei metallgekapselten gasisolierten Schaltanlagen mit einer vergleichsweise grossen Anzahl von Schaltfeldern kann in der Regel nicht vollständig auf Längskompensatoren in den Sammelschienen verzichtet werden. Erst nach einer vergleichsweise grossen Anzahl von Schaltfeldern wird ein Längskompensator pro Sammelschiene benötigt, wenn hydraulische Stossbremsen 18 in dieser Anlage eingesetzt werden. In Fig.6 ist der Einbau eines Längskompensators prinzipiell dargestellt. Zwischen den dem Längskompensator benachbarten Schaltfeldern, die durch die Tragrahmen 2i und 2j dargestellt werden, ist ein Zwischenraum 22 nötig, um Platz für den Längskompensator zu schaffen. Die Tragrahmen 2h bis 2k sind an ihren Ecken jeweils mit einer Tragschiene 16 verbunden, die durch gestrichelt ausgeführte Linien angedeutet ist. Diese Tragschienen 16 sind parallel zueinander fest in das Fundament 4 eingelassen. Die Tragrahmen 2h bis 2k sind so mit den Tragschienen 16 verbunden, dass sie in Richtung der Tragschienen 16 auf diesen gleiten können, wenn entsprechende Kräfte auf diese Tragrahmen einwirken. Eine Bewegung in andere Richtungen ist hier ausgeschlossen. Die Richtung der Sammelschienenachsen 12 verläuft parallel zu der Richtung der Tragschienen 16. In jedem der Tragrahmen 2i und 2k sind zwei hydraulische Stossbremsen 18 so zwischen dem Fundament 4 und einer der Traversen 13 eingebaut, dass ihre Wirkachsen 19 parallel zur Sammelschienenachse und beidseits im gleichen Abstand zu den Schwerpunkten 17 verlaufen. Auf diese Art ist der Längskompensator unmittelbar gegen Erdbebenstösse abgesichert.

Die hydraulische Stossbremse 18 setzt betriebsbedingten, vergleichsweise langsamen Verschiebungen der Tragrahmen 2 keinen nennenswerten Widerstand entgegen. Als betriebsbedingte Verschiebungen können hier temperaturabhängige Dehnungen bzw. Zusammenziehungen der Gehäuse der gasisolierten Schaltanlage angesehen werden. Sobald jedoch eine schockartige dynamische Belastung, beispielsweise Erdbebenstösse, auf die hydraulische Stossbremse 18 einwirkt, blockiert diese augenblicklich und wird zu einer annähernd starren Verbindung. Diese starre Verbindung leitet die an dieser Stelle wirksame Bewegungsenergie in das Fundament 4 ab, sodass sie die gasisolierte Schaltanlage nicht weiter beaufschlagen kann. Die hydraulische Stossbremse 18 besteht im wesentlichen aus einer Kolben-Zylinder-Anordnung bei der ein speziell ausgebildetes Ventil ein vergleichsweise langsames Fliessen der Hydraulikflüssigkeit von einem Volumen vor dem Kolben in einen Raum hinter dem Kolben und umgekehrt erlaubt. Ist der Kolben beispielsweise mit dem Tragrahmen 2 verbunden und der Zylinder der beschriebenen Anordnung mit dem Fundament 4, so wirkt eine geringe stetige Belastung, die beispielsweise durch sich auf den Tragrahmen 2 auswirkende Wärmedehnungen entstanden ist, über den Tragrahmen 2 auf den Kolben ein, und der Kolben drückt auf die Hydraulikflüssigkeit, die durch das speziell ausgebildete Ventil dem Druck ausweicht und beispielsweise langsam aus dem Volumen vor dem Kolben in den Raum hinter dem Kolben abfliesst. Wird der Tragrahmen 2 jedoch schockartig belastet, so blockiert das speziell ausgebildete Ventil sofort dieses Abfliessen.

In der hydraulischen Stossbremse 18 bildet sich im Fall des Blockierens ein aus Hydraulikflüssigkeit bestehendes Polster aus, welches in einem gewissen Mass kompressibel ist, und welches die durch die Bewegungsenergie erzeugten schädlichen Kraftspitzen abbaut. Die hydraulische Stossbremse 18 wirkt demnach im Falle von schockartigen dynamischen Belastungen wie eine zusätzliche Abstützung des Tragrahmens 2, allerdings bringt diese zusätzliche Abstützung den Vorteil mit sich, dass sie zusätzlich, ohne sich dauernd plastisch zu verformen, schädliche Kraftspitzen auf ungefährliche Werte abbaut. Nach dem Abklingen der schockartigen dynamischen Belastungen wird die Blockierung von selbst wieder aufgehoben und die beispielsweise gleichzeitig stattfindende langsame, auf Temperatureinflüsse zurückzuführende Bewegung des Tragrahmens 2 kann ohne nennenswerten Widerstand weiter gehen. Die Wirkung der hydraulischen Stossbremse 18 erfolgt entlang der Wirkachse 19, sie wirkt in den beiden möglichen Richtungen in gleicher Weise. Die Wirkungsumkehr erfolgt verzögerungsfrei. Bewährt für den Einsatz bei gasisolierten Schaltanlagen haben sich hydraulische Stossbremsen der Firma LISEGA GmbH., Postfach 1357, D-27393 Zeven, Deutschland.

Es sind auch Ausführungen von gasisolierten Schaltanlagen vorstellbar, bei denen eines oder mehrere der Schaltfelder nach mehr als einer Richtung beweglich aufgestellt werden. Sollen diese Schaltfelder gegen schockartige dynamische Belastungen gesichert werden, so muss der jeweilige Tragrahmen mit jeweils mindestens einer hydraulischen Stossbremse für jede der bei dem betreffenden Schaltfeld möglichen Richtungen versehen werden.

### BEZEICHNUNGSLISTE

- 1: Abgangsfeld
- 2,2a bis 2k: Tragrahmen
- 3: Winkelprofile
- 4: Fundament
- 5: Sammelschienen
- 6: Leistungsschalter
- 7: Stromwandler
- 8: Trenner
- 9: Spannungswandler
- 10: Kabelendverschluss
- 11: Hochspannungskabel
- 12: Sammelschienenachse
- 13: Traverse
- 14: Querträger
- 15: Kreuz
- 16: Tragschiene
- 17: Schwerpunkt
- 18: hydraulische Stossbremse
- 19: Wirkachsen
- 20,21: Pfeil
- 22: Zwischenraum

## Patentansprüche

1. Mit Stossdämpfern versehene Erdbebenschutzvorrichtung für eine mindestens eine Sammelschiene (5) aufweisende und in Richtung der Sammelschienenachse (12) erstreckte gasisolierte Schaltanlage mit mindestens zwei auf jeweils einem Tragrahmen (2) befestigten Schaltfeldern, mit Mitteln welche die Tragrahmen (2) so mit einem Fundament (4) verbinden, dass mindestens einer der mindestens zwei Tragrahmen (2) mindestens in Richtung der Sammelschienenachse (12) verschiebbar ist, dadurch gekennzeichnet,
- dass der mindestens eine verschiebbare Tragrahmen (2) für jede mögliche Verschiebungsrichtung mit mindestens einem Stossdämpfer versehen ist, der eine in der Ebene des Tragrahmens (2) liegende Wirkachse (19) aufweist, und
- dass diese Wirkachse (19) zudem durch den in die Ebene des Tragrahmens (2) projizierten Schwerpunkt (17) des Schaltfeldes oder möglichst nahe an diesem vorbei verläuft.

2. Erdbebenschutzvorrichtung nach Anspruch 1, dadurch gekennzeichnet,
- dass mindestens eine dieser Wirkachsen (19) parallel zur Richtung der Sammelschienenachse (12) verläuft.

3. Erdbebenschutzvorrichtung nach Anspruch 1, dadurch gekennzeichnet,
- dass der mindestens eine verschiebbare Tragrahmen (2) für jede mögliche Verschiebungsrichtung mit mindestens zwei jeweils eine in der Ebene des Tragrahmens (2) liegende Wirkachse (19) aufweisenden Stossdämpfern versehen ist, und
- dass diese Wirkachsen (19) beidseitig des in die Ebene des Tragrahmens (2) projizierten Schwerpunkts (17) des Schaltfeldes verlaufen und möglichst den gleichen Abstand von diesem aufweisen.

4. Erdbebenschutzvorrichtung nach Anspruch 3, dadurch gekennzeichnet,
- dass mindestens zwei dieser Wirkachsen (19) parallel zur Richtung der Sammelschienenachse (12) verlaufen.

5. Erdbebenschutzvorrichtung nach einem der Ansprüche 1 bis 4, dadurch gekennzeichnet,
- dass der mindestens eine Stossdämpfer betriebsbedingten vergleichsweise kleinen und vergleichsweise langsamen Verschiebungen des Tragrahmens (2) keinen nennenswerten Widerstand entgegensetzt,
- dass der mindestens eine Stossdämpfer so ausgelegt ist, dass die Auswirkungen von schockartigen dynamischen Belastungen auf den Tragrahmen (2) blockiert und Kraftspitzen abgebaut werden, und dass nach dem Abklingen der Belastung die Blockierung selbsttätig gelöst wird.

6. Erdbebenschutzvorrichtung nach Anspruch 5, dadurch gekennzeichnet,
- dass der mindestens eine Stossdämpfer als hydraulische Stossbremse (18) ausgebildet ist.

7. Erdbebenschutzvorrichtung nach Anspruch 6, dadurch gekennzeichnet,
- dass die hydraulische Stossbremse (18) einerseits mit dem Tragrahmen (2) und andererseits mit dem Fundament (4) verbunden ist.

## Claims

1. Earthquake protection device provided with shock absorbers partly due to the IEEE Paper for a gas-insulated switching installation which has at least one busbar (5), extends in the direction of the busbar axis (12) and has at least two switch panels which are each mounted on a supporting frame (2), having means which connect the supporting frames (2) to a foundation (4) such that at least one of the at least two supporting frames (2) can be displaced at least in the direction of the busbar axis (12), characterized in that
- the at least one displaceable supporting frame (2) is provided with at least one shock absorber for every possible displacement direction, which shock absorber has an active axis (19) in the plane of the supporting frame (2), and
- in that this active axis (19) additionally runs through the centre of gravity (17), projected into the plane of the supporting frame (2), of the switch panel or past it as close to it as possible.

2. Earthquake protection device according to Claim 1, characterized in that
- at least one of these active axes (19) runs parallel to the direction of the busbar axis (12).

3. Earthquake protection device according to Claim 1, characterized in that
- the at least one displaceable supporting frame (2) is provided with at least two shock absorbers for every possible displacement direction, which shock absorbers each have an active axis (19) lying in the plane of the supporting frame (2), and
- in that these active axes (19) run on both sides of the centre of gravity (17), projected into the plane of the supporting frame (2), of the switch panel and, as far as possible, are at the same distance from it.

4. Earthquake protection device according to Claim 3, characterized in that
- at least two of these active axes (19) run parallel to the direction of the busbar axis (12).

5. Earthquake protection device according to one of Claims 1 to 4, characterized in that
- the at least one shock absorber, by virtue of its operation, offers no significant resistance to comparatively small and comparatively slow displacements of the supporting frame (2),
- in that the at least one shock absorber is designated such that the effects of shock-like dynamic stresses on the supporting frame (2) are blocked and force peaks are dissipated, and in that the blocking is automatically cancelled after the stress has decayed.

6. Earthquake protection device according to Claim 5, characterized in that
- the at least one shock absorber is constructed as a hydraulic shock brake (18).

7. Earthquake protection device according to Claim 6, characterized in that
- the hydraulic shock brake (18) is connected on the one hand to the supporting frame (2) and on the other hand to the foundation (4).

## Revendications

1. Dispositif de protection contre les tremblements de terre muni d'amortisseurs pour un appareillage de commutation à isolement gazeux présentant au moins un rail collecteur (5) et s'étendant dans le sens de l'axe de rail collecteur (12) avec au moins deux champs de commutation fixés chacun sur un cadre porteur (2), avec des moyens qui relient les cadres porteurs (2) avec une fondation (4) de manière à ce qu'au moins l'un des au moins deux cadres porteurs (2) puisse coulisser au moins dans le sens de l'axe de rail collecteur (12), caractérisé par le fait
- que l'au moins un cadre porteur (2) coulissant est muni d'au moins un amortisseur pour chacun des sens de coulissement possibles, lequel présente un axe actif (19) se trouvant dans le plan du cadre porteur (2), et
- que cet axe actif (19) passe en plus au travers du centre de gravité (17) du champ de commutation projeté dans le plan du cadre porteur (2) ou passe le plus près possible de celui-ci.

2. Dispositif de protection contre les tremblements de terre selon la revendication 1, caractérisé par le fait qu'au moins l'un de ces axes actifs (19) s'étende parallèlement au sens de l'axe de rail collecteur (12).

3. Dispositif de protection contre les tremblements de terre selon la revendication 1, caractérisé par le fait
- que l'au moins un cadre porteur (2) coulissant est muni d'au moins deux amortisseurs pour chaque sens de coulissement possible, chacun d'entre eux présentant un axe actif (19) se trouvant dans le plan du cadre porteur (2), et
- que ces axes actifs (19) passent des deux côtés du centre de gravité (17) du champ de commutation projeté dans le plan du cadre porteur (2) et présentent si possible le même écart de celui-ci.

4. Dispositif de protection contre les tremblements de terre selon la revendication 3, caractérisé par le fait qu'au moins deux de ces axes actifs (19) s'étendent parallèlement au sens de l'axe de rail collecteur (12).

5. Dispositif de protection contre les tremblements de terre selon les revendications 1 à 4, caractérisé par le fait
- que l'au moins un amortisseur n'oppose aucune résistance nominale au coulissement relativement faible et relativement lent du cadre porteur (2) lié au fonctionnement,
- que l'au moins un amortisseur est conçu de telle manière que les effets des contraintes dynamiques de type choc sur le cadre porteur (2) soient bloqués et que les pointes de forces soient éliminées et que le blocage soit automatiquement relâché après le décroissement de la contrainte.

6. Dispositif de protection contre les tremblements de terre selon la revendication 5, caractérisé par le fait que l'au moins un amortisseur est réalisé sous la forme d'un amortisseur à fluide hydraulique (18).

7. Dispositif de protection contre les tremblements de terre selon la revendication 6, caractérisé par le fait que l'amortisseur à fluide hydraulique (18) est relié d'un côté avec la cadre porteur (2) et de l'autre côté avec la fondation (4).
